# EUROPEAN PATENT APPLICATION

(11) **EP 4 726 559 A1**
(43) Date of publication of application: **15.04.2026**
(21) Application number: 25203322.0
(22) Date of filing: 19.09.2025
(51) Int. Cl.: G06F 12/0862, G06F 12/0868

(54) **METHOD FOR OPERATING MEMORY CONTROLLER, MEMORY CONTROLLER AND STORAGE DEVICE**

(30) Priority: 10.10.2024 KR 20240137863; 17.01.2025 KR 20250007214
(71) Applicant: Samsung Electronics Co., Ltd., Suwon-si, Gyeonggi-do 16677 (KR)
(72) Inventor: SHIN, Seok Ha, 16677 Suwon-si, Gyeonggi-do (KR); KIM, Min Kyu, 16677 Suwon-si, Gyeonggi-do (KR); LEE, Jong Min, 16677 Suwon-si, Gyeonggi-do (KR); LEE, Chong Hyun, 16677 Suwon-si, Gyeonggi-do (KR); JANG, Young Jin, 16677 Suwon-si, Gyeonggi-do (KR)
(74) Representative: Kuhnen & Wacker Patent- und Rechtsanwaltsbüro PartG mbB

(57) **Abstract**

A method for operating a memory device, memory controller and/or storage device are provided. The method comprising collecting a plurality of service logs indicating a result of an operation of providing requested data to a host device (10) for a duration, adjusting a read ahead distance based on a first number of first service logs among the plurality of service logs, the first service logs indicating that the data to be requested by the host device (10) has been successfully predicted, as predicted data, and the memory controller has failed to provide the predicted data, and prefetching a data chunk from a nonvolatile memory device (300) to a cache memory (220) based on the read ahead distance.

## Description

### BACKGROUND

### Technical Field

Some example embodiments of the present inventive concepts relate to a method for operating a memory controller, the memory controller, and/or a storage device.

### Description of the Related Art

A semiconductor memory is categorized into a volatile memory device, such as Static Random-Access Memory (SRAM) and Dynamic Random-Access Memory (DRAM), in which stored data is destroyed when power supply is blocked, and a nonvolatile memory device, such as a flash memory device, a phase-change random access memory (PRAM), a magneto-resistive RAM (MRAM), a resistive RAM (RRAM) and/or a ferro-electric RAM (FRAM), in which stored data is maintained even though power supply is blocked.

A storage device is a device that stores data under the control of a host device such as a computer, a smartphone and/or a smart pad. The storage device may include a device that stores data in a magnetic disk such as a hard disk drive (HDD), a device that stores data in a nonvolatile memory such as a solid state drive (SSD), and a memory card.

With the development of interface technology between a storage device and a host device, a data request speed of the host device is also gradually increasing. In response to a fast data request from the host device, the storage device may utilize a read-ahead scheme in which data to be requested from the host device is predicted and prefetched to a cache memory in advance.

### SUMMARY

Some example embodiments provide a method for operating a memory controller to determine an optimal read ahead distance.

Some example embodiments provide a memory controller that performs a method for operating a memory controller to determine an optimal read ahead distance.

Some example embodiments provide a storage device to which a memory controller, which performs a method for operating a memory controller to determine an optimal read ahead distance, is applied.

Example embodiments of the present inventive concepts are not limited to those mentioned above and some example embodiments, which are not mentioned herein, will be clearly understood by those skilled in the art from the following description of the present inventive concepts.

According to some example embodiments of present inventive concepts, there is provided a method for operating a memory controller, the method comprises collecting a plurality of service logs indicating a result of an operation of providing requested data to a host device for a duration, adjusting a read ahead distance based on a first number of first service logs among the plurality of service logs, the first service logs indicating that the data to be requested by the host device has been successfully predicted, as predicted data, and the memory controller has failed to provide the predicted data, and prefetching a data chunk from a nonvolatile memory device to a cache memory based on the read ahead distance.

According to some example embodiments of present inventive concepts, there is provided a memory controller comprising a memory configured to store a plurality of commands, and a processing circuit, the processing circuit configured to execute the plurality of commands to cause the processing circuit to perform, collecting a plurality of service logs indicating a result of a first operation of providing requested data to a host device for a duration, adjusting a read ahead distance based on a first number of first service logs among the plurality of service logs, the first service logs indicating that the data to be requested by the host device has been successfully predicted, as predicated data, and the memory controller has failed to provide the predicted data, and prefetching a data chunk from a nonvolatile memory device to a cache memory based on the read ahead distance.

According to some example embodiments of present inventive concepts, there is provided a storage device comprising a nonvolatile memory device configured to store first data, and a memory controller configured to provide requested second data from the nonvolatile memory device to a host device in response to a read request from the host device, the memory controller including a cache memory, a log management unit configured to collect a plurality of service logs indicating a result of an operation of providing the requested second data to the host device for a duration, a read ahead management unit configured to adjust a read ahead distance based on a number of service logs among the plurality of service logs, the service logs indicating that data to be requested by the host device has been successfully predicted, as predicted data, and the memory controller has failed to provide the predicted data, and a prefetch controller configured to prefetch a data chunk from the nonvolatile memory device to the cache memory based on the read ahead distance.

According to some example embodiments, there is provided a storage system comprising a host device; and a storage device, the storage device including a nonvolatile memory device and a storage controller, the storage controller configured to, collect a plurality of service logs indicating a result of an operation of providing requested data to the host device for a duration; adjust a read ahead distance based on a first number of first service logs among the plurality of service logs, the first service logs indicating that the data to be requested by the host device has been successfully predicted, as predicted data, and the storage controller has failed to provide the predicted data; and prefetch a data chunk from the nonvolatile memory device to a cache memory based on the read ahead distance.

In some example embodiments, the adjusting the read ahead distance based on the first number of the first service logs among the plurality of service logs includes, comparing, as a first comparison, a first sum of the first number of the first service logs and a second number of second service logs among the plurality of service logs with a third number of third service logs among the plurality of service logs; and adjusting the read ahead distance based on the first comparison, the second service logs indicating that the data to be requested by the host device has been successfully predicted and the storage controller has successfully provided the predicted data, and the third service logs indicating that cached data is provided to the host device.

In some example embodiments, the first comparison of the first sum of the first number of the first service logs and the second number of the second service logs with the third number of the third service logs includes determining whether a ratio of the first sum of the first number of the first service logs and the second number of the second service logs to a second sum of the first number of the first service logs, the second number of the second service logs, and the third number of the third service logs is greater than a first threshold value.

In some example embodiments, the adjusting the read ahead distance based on the first number of the first service logs among the plurality of service logs further includes comparing, as a second comparison, a second sum of the first number of the first service logs and a fourth number of fourth service logs among the plurality of service logs with the second number of the second service logs, the fourth service logs indicating that prediction for the data to be requested by the host device has failed.

Details of some example embodiments are included in the detailed description and drawings.

### BRIEF DESCRIPTION OF THE DRAWINGS

The above and other aspects and features of some example embodiments will become more apparent by describing in detail some example embodiments thereof with reference to the attached drawings, in which:
FIG. 1 is a block diagram illustrating a host-storage system according to some example embodiments.
FIG. 2 is a block diagram illustrating a memory controller according to some example embodiments.
FIG. 3 is a block diagram illustrating a service log corresponding to a first case among a plurality of collected service logs according to some example embodiments.
FIG. 4 is a block diagram illustrating a service log corresponding to a second case among a plurality of collected service logs according to some example embodiments.
FIG. 5 is a block diagram illustrating a service log corresponding to a third case among a plurality of collected service logs according to some example embodiments.
FIG. 6 is a block diagram illustrating a service log corresponding to a fourth case among a plurality of collected service logs according to some example embodiments.
FIG. 7 is a flow chart illustrating a method for operating a memory controller according to some example embodiments.
FIG. 8 is a view illustrating a method of adjusting a read ahead distance according to some example embodiments.
FIG. 9 is a flow chart illustrating a method for operating a memory controller according to some example embodiments.
FIG. 10 is a flow chart illustrating a method for operating a memory controller according to some example embodiments.
FIG. 11 is a flow chart illustrating a method for operating a memory controller according to some example embodiments.
FIG. 12 is a block diagram illustrating a host-storage system to which a memory controller according to some example embodiments is applied.
FIG. 13 is a block diagram illustrating a system that includes a storage device to which a memory controller according to some example embodiments is applied.
FIG. 14 is a block diagram illustrating a server system including a storage device to which a memory controller according to some example embodiments is applied.

### DETAILED DESCRIPTION

Hereinafter, some example embodiments according to the present inventive concepts will be described with reference to the accompanying drawings.

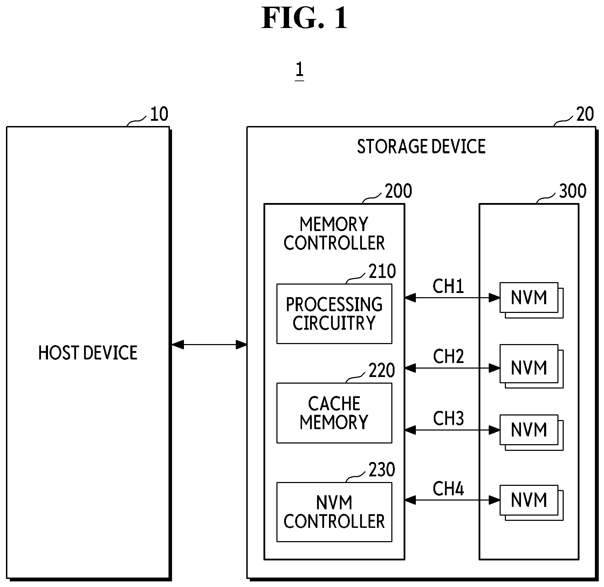

FIG. 1 is a block diagram illustrating a host-storage system according to some example embodiments.

Referring to FIG. 1, a host-storage system 1 may include a host device 10 and a storage device 20. The host device 10 may perform communication with the storage device 20.

The storage device 20 may include a memory controller 200 and a nonvolatile memory device 300. For example, the storage device 20 may include a solid state drive (SSD), a universal flash storage (UFS), a memory card, a micro SD card, an embedded multi-media (eMMC) card, and the like, but example embodiments are not limited thereto.

The nonvolatile memory device 300 may perform a write operation, a read operation, and an erase operation under the control of the memory controller 200. The nonvolatile memory device 300 may include a plurality of nonvolatile memories (NVMs) connected to a plurality of channels CH1 to CH4, respectively. Each of the plurality of NVMs may include a NAND flash memory.

The plurality of NVMs may be connected to the memory controller 200 through the plurality of channels CH1 to CH4. Although the number of channels is shown as four in FIG. 1, example embodiments are not limited thereto. Each of the plurality of NVMs may receive a write command, an address, and data from the memory controller 200 and write the data in memory cells corresponding to the address. Each of the plurality of NVMs may receive a read command and an address from the memory controller 200, read the data from memory cells corresponding to the address and output the data to the memory controller 200. Each of the plurality of NVMs may receive an erase command and an address from the memory controller 200 and erase data of memory cells corresponding to the address.

The memory controller 200 may process various requests from the host device 10. The memory controller 200 may perform a write operation (or a program operation), a read operation, and an erase operation with respect to the nonvolatile memory device 300 in response to a read request, a write request, and/or an erase request from the host device 10. The memory controller 200 may control the nonvolatile memory device 300. The memory controller 200 may be implemented using a System on Chip (SoC), an Application Specific Integrated Circuit (ASIC), a Field Programmable Gate Array (FPGA), etc.

The memory controller 200 may include a processing circuitry 210, a cache memory 220, and an NVM controller 230. For example, the processing circuitry 210 may control an operation of the memory controller 200 by processing a plurality of command languages constituting firmware stored in a read only memory (ROM). In some example embodiments, when the processing circuitry 210 receives sequential read requests from the host device 10, the processing circuitry 210 may be able to quickly provide data to the host device 10 in response to the sequential read requests. Accordingly, the processing circuitry 210 may quickly provide the data to the host device 10 by using a read ahead scheme.

The read ahead (e.g., read ahead scheme) refers to a prefetching operation of determining a series of data (hereinafter, referred to as a 'data chunk') having sequential logical addresses in advance from a logical address of requested data in response to a read request from the host device 10, reading the data chunk in advance from the nonvolatile memory device 300 through the NVM controller 230 and storing the data chunk in a cache memory. The operation of determining a data chunk having sequential logical addresses in advance from a logical address of requested data in response to a read request from the host device 10 may be referred to as a prediction operation hereinafter. In some example embodiments, since the data requested by the host device 10 and data having sequential logical addresses may be requested by the host device 10 later, the memory controller 200 may quickly process the sequential read requests from the host device 10 by using the read ahead scheme. Since there may be limitations in the size of the cache memory 220 and interface performance inside the storage device 20, it is advantageous to determine an appropriate size of the data chunk. The size of the data chunk to be prefetched may be referred to as a read ahead (or prefetched) distance.

In some example embodiments, the processing circuitry 210 may store a portion of the data previously requested by the host device 10 in the cache memory 220. For example, an operation of storing a portion of the data previously requested by the host device 10 in the cache memory 220 may be referred to as a caching operation. In some example embodiments, since the host device 10 may request the data once again, when the host device 10 stores at least a portion of the data previously requested, the memory controller 200 may quickly process the repetitive read request of the host device 10.

The cache memory 220 may include an SRAM or a DRAM. The cache memory 220 may have a smaller capacity than the NVM, but may have a faster response time, a faster access time, and a faster operation speed than the NVM. For example, the cache memory 220 may store at least a portion of the data previously requested by the host device 10 under the control of the memory controller 200, and may store data predicted to be requested by the host device 10 in advance.

The NVM controller 230 may control the nonvolatile memory device 300 under the control of the processing circuitry 210. The NVM controller 230 may provide a command, data, and an address to the nonvolatile memory device 300 through the plurality of channels CH1 to CH4 and receive the data from the nonvolatile memory device 300.

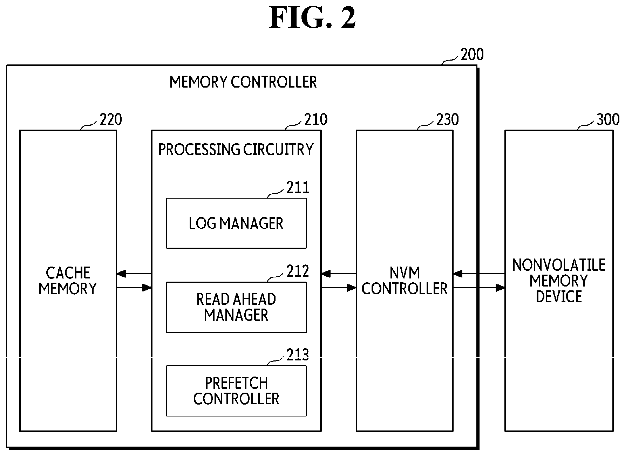

FIG. 2 is a block diagram illustrating a memory controller according to some example embodiments.

A detailed description of redundant portions of those of FIG. 1 will be omitted in FIG. 2. Referring to FIG. 2, the memory controller 200 may include a processing circuitry 210, a cache memory 220, and an NVM controller 230. The processing circuitry 210 may include a log management unit 211 (e.g., a log manager), a read ahead management unit 212 (e.g., read ahead manager), and a prefetch controller 213. The log management unit 211, the read ahead management unit 212, and the prefetch controller 213 may be implemented in the processing circuitry 210 through a dedicated circuit and/or dedicated hardware. In some example embodiments, the log management unit 211, the read ahead management unit 212, and the prefetch controller 213 may be implemented as software by a plurality of command languages constituting firmware when the processing circuitry 210 executes the firmware. In some example embodiments, the log management unit 211, the read ahead management unit 212, and the prefetch controller 213 may be implemented as a combination of hardware and software.

The log management unit 211 may collect service logs indicating a result of an operation, in which the memory controller 200 provides requested data to the host device in response to a read request from the host device, for a preset or alternatively, a desired duration. The preset or alternatively, desired duration may be, for example, 10 milliseconds (ms), but this is only an example, and the example embodiments are not limited thereto. The log management unit 211 may classify the plurality of service logs collected for the preset or alternatively, desired duration into several different types of examples.

The read ahead management unit 212 may adjust a read ahead distance, for example, the size of the data chunk to be prefetched. Hereinafter, adjusting the read ahead distance and adjusting the size of the data chunk to be prefetched will be used to indicate the same meaning. In some example embodiments, for example, the read ahead distance may be adjusted based on the number of service logs, which indicate that data to be requested by the host device has been successfully predicted but that the read ahead management unit 212 has failed to provide the predicted data, among a plurality of service logs collected for the preset or alternatively, desired duration. A detailed method of adjusting the read ahead distance according to some example embodiments will be described later.

The prefetch controller 213 may perform prediction in accordance with the adjusted read ahead distance (e.g., the size of the data chunk to be prefetched), read the data chunk predicted through the NVM controller 230 and store the data chunk in the cache memory 220.

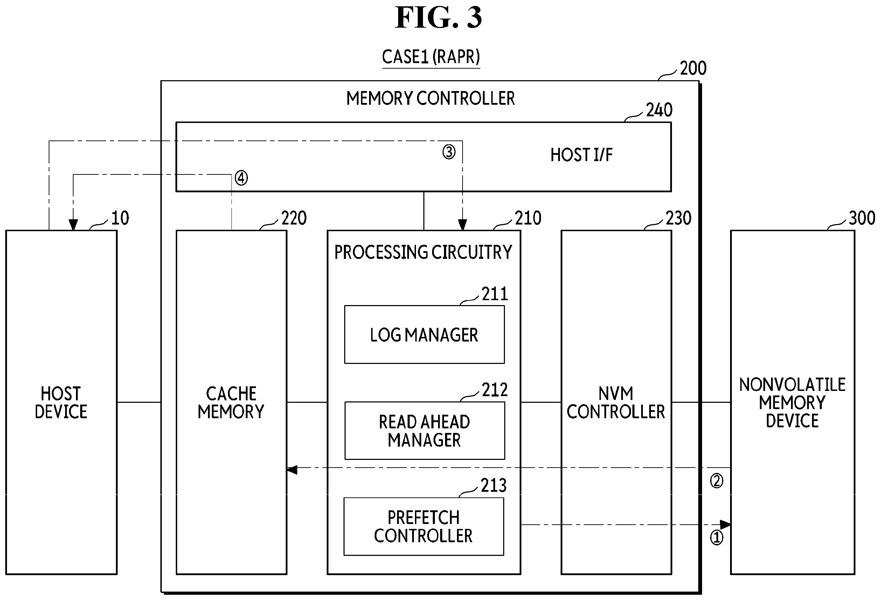

FIG. 3 is a block diagram illustrating a service log corresponding to a first case among a plurality of collected service logs according to some example embodiments.

Referring to FIG. 3, the processing circuitry 210 may predict a subsequent read request from the host device 10 and instruct the nonvolatile memory device 300 to read the data chunk predicted to be requested by the host device 10 through the NVM controller 230 (CASE1-①). The nonvolatile memory device 300 may provide the data chunk to the processing circuitry 210 through the NVM controller 230, and the processing circuitry 210 may store the provided data chunk in the cache memory 220 (CASE1-②). Afterwards, when the host device 10 provides a read request for data included in the data chunk through a host I/F 240 (CASE1-③), the processing circuitry 210 may provide the data requested to be read through the host I/F 240 to the host device 10 (CASE1-④). The first case CASE1 indicates that the data to be requested by the host device 10 has been successfully predicted and that the memory controller 200 has successfully provided the predicted data. The first case CASE1 may be referred to as a read after prefetch read (RAPR).

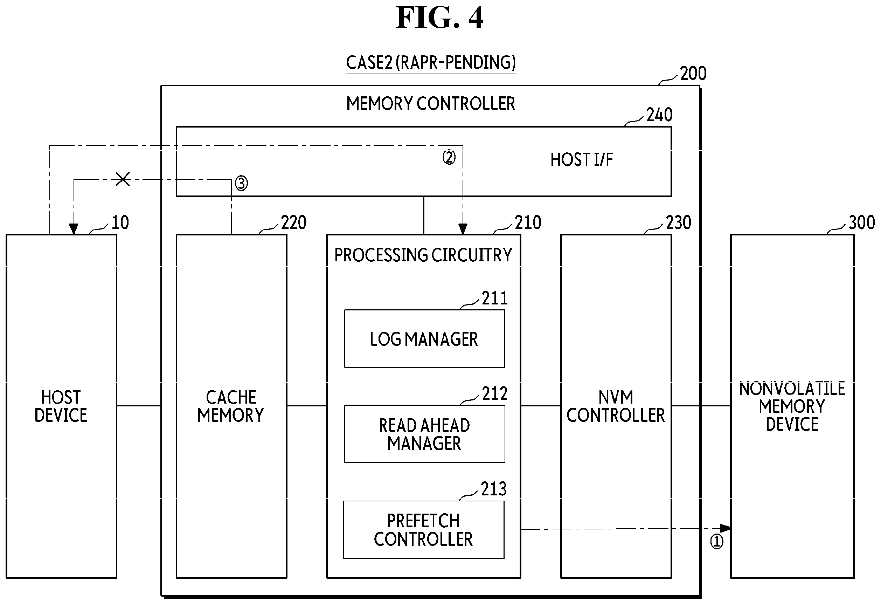

FIG. 4 is a block diagram illustrating a service log corresponding to a second case among a plurality of collected service logs according to some example embodiments.

Referring to FIG. 4, the processing circuitry 210 may predict a subsequent read request from the host device 10 and instruct the nonvolatile memory device 300 to read the data chunk predicted to be requested by the host device 10 through the NVM controller 230 (CASE2-①). In some example embodiments, unlike the first case CASE1, the nonvolatile memory device 300 may not provide the data chunk to the processing circuitry 210 for various reasons. In some example embodiments, the processing circuitry 210 may receive the data chunk, but may not be able to store the data chunk in the cache memory 220. Afterwards, when the host device 10 provides a read request for the data predicted through the host I/F 240 (CASE2-②), the processing circuitry 210 cannot provide the data requested to be read through the host I/F 240 to the host device 10 (in some example embodiments, "the processing circuitry 210 cannot provide the data" means that the processing circuitry 210 cannot provide the prefetched data to the cache memory 220) because the predicted data has not been prefetched to the cache memory 220 (CASE2-③). The second case CASE2 indicates that data to be requested by the host device 10 has been successfully predicted but the memory controller 200 has failed to provide the predicted data. The second case CASE2 may be referred to as Read After Prefetch Read (RAPR)-PENDING.

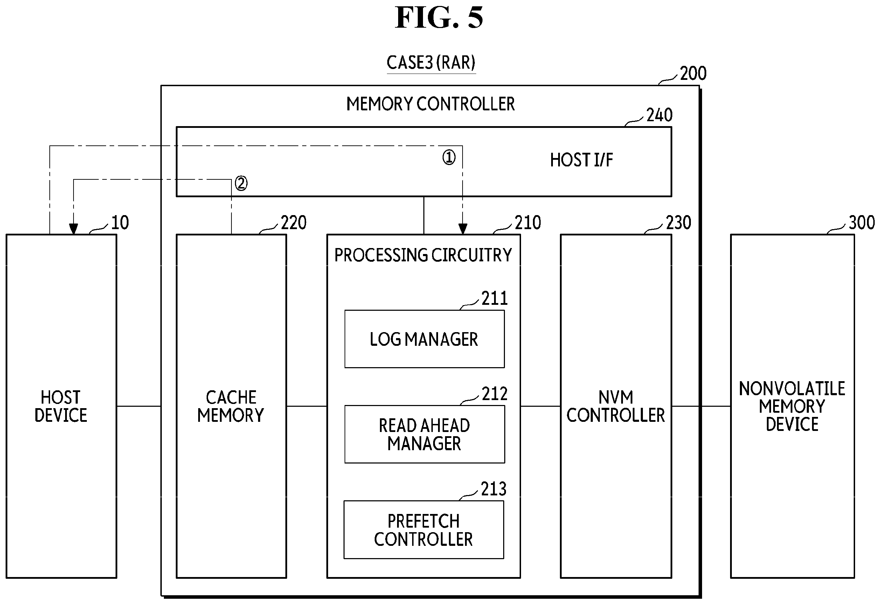

FIG. 5 is a block diagram illustrating a service log corresponding to a third case among a plurality of collected service logs according to some example embodiments.

Referring to FIG. 5, the processing circuitry 210 may provide data in response to a read request from the host device 10 and store at least a portion of the provided data in the cache memory 220 (for example, a caching operation may be performed). Afterwards, when the host device 10 provides a read request for data (data stored in the cache memory 220) that has been previously requested through the host I/F 240 (CASE3-①), the processing circuitry 210 may provide the data that has been requested to be read through the host I/F 240 to the host device 10 (CASE3-②). The third case CASE3 indicates that data cached in the cache memory 220 is provided to the host device 10. The third case CASE3 may be referred to as a read after read (RAR). In some example embodiments, I cases CASE1 and CASE2 in which data to be requested by the host device 10 has been successfully predicted or the case CASE3 in which the data cached in the cache memory 220 is provided to the host device 10 may be classified as hit cases.

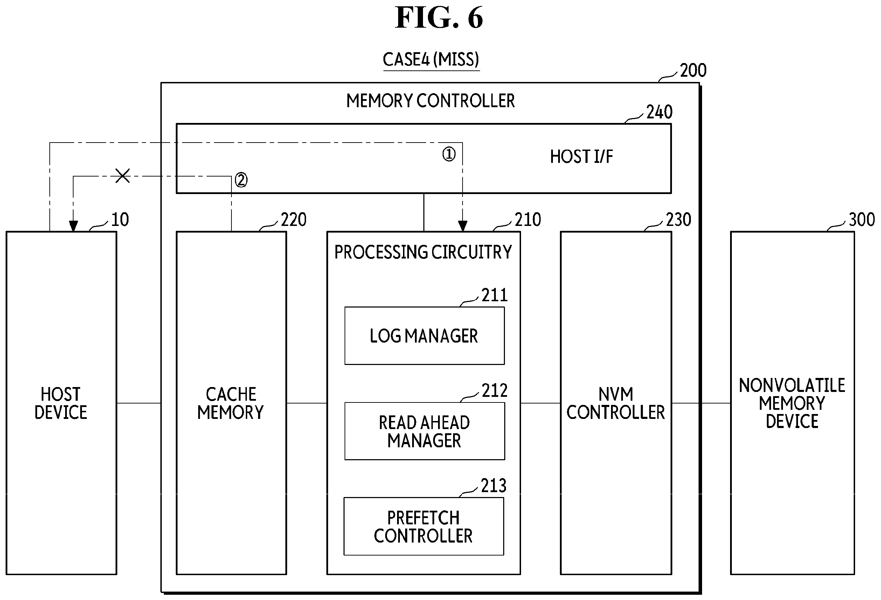

FIG. 6 is a block diagram illustrating a service log corresponding to a fourth case among a plurality of collected service logs according to some example embodiments.

Referring to FIG. 6, when the processing circuitry 210 predicts a subsequent read request from the host device 10 but the host device 10 provides a read request for unpredicted data through the host I/F 240 (CASE4-①), the processing circuitry 210 cannot provide the data requested to be read through the host I/F 240 to the host device 10 because the prediction for the read request has failed (in some example embodiments, "the processing circuitry 210 cannot provide the data" means that the processing circuitry 210 cannot provide the data prefetched to the cache memory 220) (CASE4-②). The fourth case CASE4 indicates that the prediction for the data to be requested by the host device 10 has failed. The fourth case CASE4 may be classified as a miss case. According to some example embodiments, in the miss case, a prediction failure that inevitably occurs as the read request of the host device 10 corresponding to a random read corresponds to a random miss, and a prediction failure that occurs for various reasons such as processing speed although the read request of the host device 10 corresponding to a sequential read corresponds to a sequential miss.

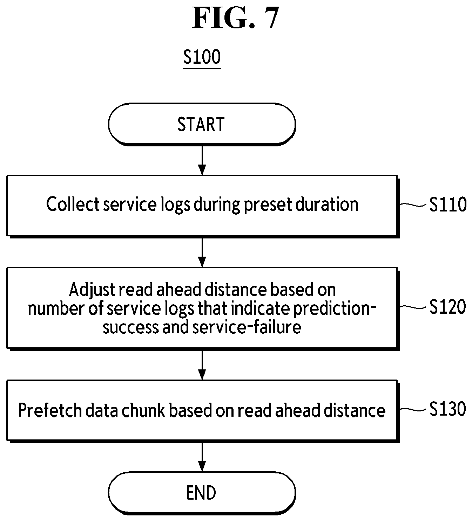

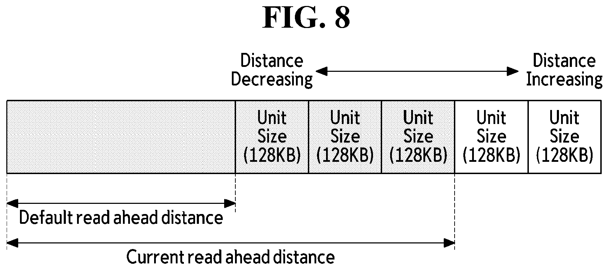

FIG. 7 is a flow chart illustrating a method for operating a memory controller according to some example embodiments. FIG. 8 is a view illustrating a method of adjusting a read ahead distance according to some example embodiments.

Referring to FIG. 7, a method S 100 for operating a memory controller 200 may include collecting a plurality of service logs by the memory controller 200 for a preset or alternatively, a desired duration (S110). For example, the memory controller 200 may collect a plurality of service logs indicating a result of an operation, in which the memory controller 200 provides the host device 10 with requested data in response to a read request from the host device 10, for a preset or alternatively, a desired duration. The preset or alternatively, desired duration may be, for example, 10 ms, but this is only an example and example embodiments are not limited thereto. The memory controller 200 may classify the plurality of service logs collected for the preset or alternatively, desired duration into several different types of cases. For example, the memory controller 200 may classify the plurality of service logs collected for the preset or alternatively, desired duration into the first to fourth cases CASE1 to CASE4 described with reference to FIGS. 3 to 6.

The method S100 for operating a memory controller 200 may include adjusting a read ahead distance based on a ratio of service logs, which indicate that the memory controller 200 has successfully predicted data to be requested by the host device 10 but has failed to provide the predicted data to the host device 10, among the plurality of service logs (S120). In some example embodiments, the memory controller 200 may classify the plurality of service logs collected for the preset or alternatively, desired duration into the first to fourth cases CASE1 to CASE4. The first case CASE1 indicates that the data to be requested by the host device 10 has been successfully predicted and the memory controller 200 has successfully provided the predicted data (RAPR). The second case CASE2 indicates that the data to be requested by the host device 10 has been successfully predicted but the memory controller 200 has failed to provide the predicted data (RAPR-PENDING). The third case CASE3 indicates that the data cached in the cache memory 220 is provided to the host device 10 (RAR). The fourth case CASE4 indicates that the memory controller 200 has failed to predict the data to be requested by the host device 10 (MISS). The memory controller 200 may adjust the read ahead distance based on a ratio of service logs, which correspond to the second case CASE2 (RAPR-PENDING), among the plurality of service logs.

The method S100 for operating a memory controller may include prefetching the data chunk to the cache memory by the memory controller 200 based on the read ahead distance (S130). Referring to FIG. 8, the data chunk to be prefetched according to some example embodiments is shown in FIG. 8. In some example embodiments, a length of the data chunk in a horizontal direction means a read ahead distance (e.g., the size of the data chunk to be prefetched). Initially, the read ahead distance may have, for example, a default value. In some example embodiments, when the read ahead distance is initialized, the read ahead distance may have a default value. The default value may be preset, e.g., a preset value or alternatively, a desired value. For example, the default value may be 0 or greater than 0. In some example embodiments, when the memory controller increases the read ahead distance, the size of the data chunk to be prefetched may be increased by a unit size. In some example embodiments, when the memory controller reduces the read ahead distance, the size of the data chunk may be reduced by a unit size. The unit size may be, for example, 128 KB, but is only an example, and example embodiments of the present inventive concepts are not limited thereto. The memory controller 200 may adjust the read ahead distance. The memory controller 200 may prefetch the data chunk to the cache memory 220 in accordance with the adjusted current read ahead distance.

Referring back to the operation S120, the second case CASE2 (RAPR-PENDING) may be regarded as a hit because the read request of the host device 10 has been successfully predicted in view of the memory controller 200. However, in some example embodiments, in view of the host device 10, the predicted data is prefetched, and the prefetched data may not be immediately served. In some example embodiments, when the second case CASE2 (RAPR-PENDING) is not separately considered in adjusting the read ahead distance, it may be difficult to determine an appropriate read ahead distance. For example, when the memory controller 200 does not distinguish the first case CASE1 (RAPR) from the second case CASE2 (RAPR-PENDING) in adjusting the read ahead distance, the memory controller 200 may determine that the current read ahead distance is appropriate even though there are many examples in which the prefetched data cannot be served to the host device 10. Therefore, the current read ahead distance may be maintained without adjustment. This may cause, for example, a decrease in data I/O performance of the storage device 20.

In some example embodiments, when the memory controller 200 adjusts the read ahead distance by separately distinguishing the first case CASE1 (RAPR) from the second case CASE2 (RAPR-PENDING), the current read ahead distance may be appropriately adjusted in consideration of the fact that there are many examples in which the prefetched data is not served to the host device 10 even though a successful ratio in the prediction for the read request is high.

The memory controller 200 according to some example embodiments of the present inventive concepts may determine an appropriate read ahead distance and quickly provide the requested data to the host device in response to the sequential read requests from the host device 10. Accordingly, it is possible to provide a memory controller 200 capable of improving data I/O performance of the storage device 20.

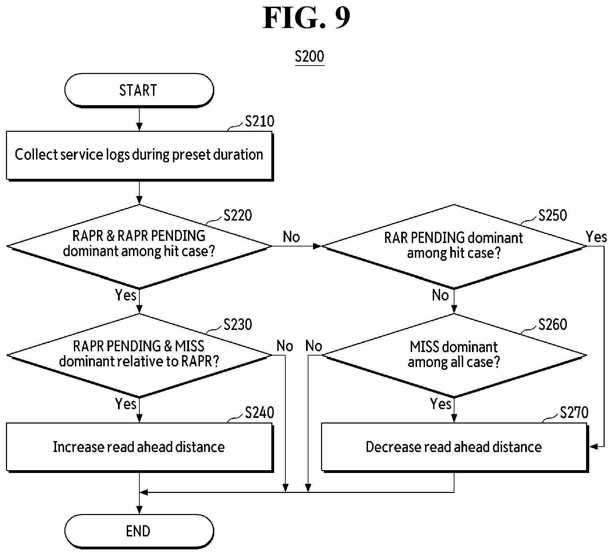

FIG. 9 is a flow chart illustrating a method for operating a memory controller according to some example embodiments.

A detailed description of redundant portions of those of FIG. 7 will be omitted in FIG. 9. Referring to FIG. 9, a method S200 for operating a memory controller 200 may include collecting the plurality of service logs by the memory controller 200 for a preset or alternatively, a desired duration (S210).

The method S200 for operating a memory controller 200 may include determining whether the first and second cases RAPR and RAPR-PENDING are superior (e.g., dominant) to the third case RAR (S220) by comparing the sum of the number of service logs, which correspond to the case (e.g., the second case RAPR-PENDING) that data to be requested by the host device 10 has been successfully predicted but the memory controller 200 has failed to provide the predicted data, among a plurality of service logs and the number of service logs, which correspond to the case (e.g., the first case RAPR) that data to be requested by the host device 10 has been successfully predicted and the memory controller 200 has successfully provided the predicted data, with the number of service logs corresponding to the case (e.g., the third case RAR) that the cached data is provided to the host device 10 (S220). For example, the fact that the first and second cases RAPR and RAPR-PENDING are superior (e.g., dominant) to the third case RAR may mean that it is more appropriate to use the read ahead scheme when processing the sequential read requests from the host device 10.

The method S200 for operating a memory controller 200 may include determining whether the second and fourth cases RAPR-PENDING and MISS are superior (e.g., dominant) to the first case RAPR (S230) by comparing the sum of the number of service logs corresponding to the second case RAPR-PENDING and the number of service logs corresponding to the case (e.g., the fourth case MISS) that the prediction for the data to be requested by the host device 10 has failed with the number of service logs corresponding to the first case RAPR when the memory controller 200 determines that first and second cases RAPR and RAPR-PENDING are superior (e.g., dominant) to the third case RAR ("Yes" in S220). For example, when the second and fourth cases RAPR-PENDING and MISS are superior (e.g., dominant) to the first case RAPR, it may mean that the amount of data to be read ahead is insufficient.

The method S200 for operating a memory controller 200 may include increasing the read ahead distance by the memory controller 200 (S240) when the memory controller determines that the second and fourth cases RAPR-PENDING and MISS are superior (e.g., dominant) to the first case RAPR ("Yes" in S230). In some example embodiments, when the second and fourth cases RAPR-PENDING and MISS are superior (e.g., dominant) to the first case, since the amount of data to be read ahead needs to be increased, the memory controller 200 may increase the read ahead distance. In some example embodiments, when the memory controller 200 determines that the second and fourth cases RAPR-PENDING and MISS are not superior (e.g., not dominant) to the first case RAPR ("No" in S230), this may mean that the amount of data to be read ahead is sufficient. Therefore, in some example embodiments, the execution of the method may be terminated without adjusting the read ahead distance.

The method S200 for operating a memory controller 200 may include determining whether the third case RAR is superior (e.g., dominant) to the first and second cases RAPR and RAPR-PENDING (S250), for example, when the memory controller 200 determines that the first and second cases RAPR and RAPR-PENDING are not superior (e.g., not dominant) to the third case RAR ("No" in S220). For example, the fact that the third case RAR is superior (e.g., dominant) to the first and second cases RAPR and RAPR-PENDING may mean that the host device 10 is likely to request data to be read again, which has been previously requested.

The method S200 for operating a memory controller 200 may include reducing the read ahead distance (S270) when the memory controller 200 determines that the third case RAR is superior (e.g., dominant) to the first and second cases RAPR and RAPR-PENDING ("Yes" in S250). For example, when the third case RAR is superior (e.g., dominant) to the first and second cases RAPR and RAPR-PENDING, it may be advantageous to reduce the amount of data to be read ahead and the memory controller 200 may reduce the read ahead distance.

The method S200 for operating a memory controller 200 may include determining whether the fourth case MISS is superior (e.g., dominant) to the other cases (S260) by comparing the number of service logs corresponding to the fourth case MISS with the number of service logs corresponding to the first to third cases RAPR, RAPR-PENDING and RAR when the memory controller 200 determines that the third case RAR is not superior to the first and second cases RAPR and RAPR-PENDING ("No" in S250). For example, the fact that the fourth case MISS is superior (e.g., dominant) to the first to third cases RAPR, RAPR-PENDING and RAR may mean that the probability of prediction success is low as the sequential read requests of the host device 10 are superior in a random read.

The method S200 for operating a memory controller 200 may include reducing a prefetch width (S270), for example, by decreasing a read ahead distance, when the memory controller 200 determines that the fourth case MISS is superior (e.g., dominant) to the other cases ("Yes" in S260). For example, when the fourth case MISS is superior (e.g., dominant) to the other cases, since it would be advantageous to reduce the amount of data to be read ahead, the memory controller 200 may reduce the read ahead distance.

In the method S200 for operating a memory controller 200, when the memory controller 200 determines that the fourth case MISS is not superior (e.g., not dominant) to the other cases ("No" in S260), it is difficult to determine whether it would be advantageous to reduce the amount of data to be read ahead at present. Therefore, in some example embodiments, the execution of the method may be terminated without adjusting the read ahead distance.

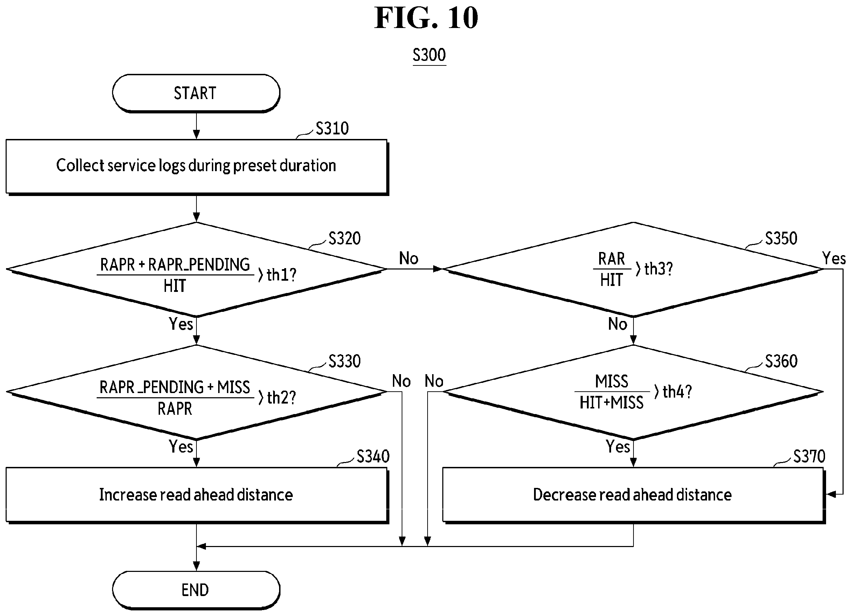

FIG. 10 is a flow chart illustrating a method for operating a memory controller according to some example embodiments.

A detailed description of redundant portions of those of FIGS. 7 and 9 will be omitted in FIG. 10.

A method S300 for operating a memory controller 200 may include collecting a plurality of service logs for a preset, or alternatively, a desired duration (S310).

The method S300 for operating a memory controller 200 may include determining whether a ratio of the service logs corresponding to the first and second cases RAPR and RAPR-PENDING among the service logs corresponding to a hit is greater than a first threshold value th1 (S320) in response to the memory controller 200 determining whether the first and second cases RAPR and RAPR-PENDING are superior (e.g., dominant) to the third case RAR. The service logs corresponding to a hit may mean service logs corresponding to the first to third cases RAPR, RAPR-PENDING and RAR. The first threshold th1 may be, for example, 0.7, but this is only an example, and example embodiments are not limited thereto.

The method S300 for operating a memory controller 200 may include determining whether a ratio of the service logs corresponding to the second and fourth cases RAPR-PENDING and MISS to the service logs corresponding to the first case RAPR is greater than a second threshold value th2 (S330) in order for the memory controller 200 to determine whether the second and fourth cases RAPR-PENDING and MISS are superior (e.g., dominant) to the first case RAPR when the memory controller 200 determines that the ratio of the service logs corresponding to the first and second cases RAPR and RAPR-PENDING in the service logs corresponding to a hit is greater than the first threshold value th1 ("Yes" in S320). The second threshold value th2 may be, for example, 0.5, but this is only an example, and example embodiments are not limited thereto.

In some example embodiments, the method S300 for operating a memory controller 200 (S300) may include increasing the read ahead distance (S340) when the memory controller 200 determines that a ratio of the service logs corresponding to the second and fourth cases RAPR-PENDING and MISS and the service logs corresponding to the first case RAPR is greater than the second threshold value th2 ("Yes" in S330). In some example embodiments, when the memory controller 200 determines that the ratio of the service logs corresponding to the second and fourth cases RAPR-PENDING and MISS and the service logs corresponding to the first case RAPR is not greater than the second threshold value th2 ("No" in S330), the memory controller 200 may terminate the execution of the method S300 without adjusting the read ahead distance.

The method S300 for operating a memory controller 200 may include determining whether a ratio of the service logs corresponding to the third case RAR in the service logs corresponding to a hit is greater than a third threshold value th3 (S350) in response to the memory controller 200 to determining that the third case RAR is superior (e.g., dominant) to the first and second cases RAPR and RAPR-PENDING when the ratio of the service logs corresponding to the first and second cases RAPR and RAPR-PENDING in the service logs corresponding to a hit is not greater than the first threshold value th1 ("No" in S320). The third threshold value th3 may be, for example, 0.5, but this is only an example, and example embodiments are not limited thereto.

The method S300 for operating a memory controller 200 may include reducing the read ahead distance (S370) when the memory controller 200 determines that the ratio of the service logs corresponding to the third case RAR in the service logs corresponding to a hit is greater than the third threshold value th3 ("Yes" in S350).

The method S300 for operating a memory controller 200 may include determining whether a ratio of the service logs corresponding to the fourth case MISS in a plurality of service logs corresponding to a hit is greater than a fourth threshold value th4 (S360) in response to the memory controller 200 determining that the fourth case MISS is superior (e.g., dominant) to the other cases when the ratio of the service logs corresponding to the third case RAR in the service logs corresponding to a hit is not greater than the third threshold value th3 ("No" in S350). The fourth threshold value th4 may be, for example, 0.7, but this is only an example, and example embodiments are not limited thereto.

The method S300 for operating a memory controller 200 may include reducing the read ahead distance (S370) when the memory controller determines that the ratio of the service logs corresponding to the fourth case MISS in the plurality of service logs is greater than the fourth threshold value th4 ("Yes" in S360).

In the method S300 for operating a memory controller 200, when the memory controller 200 determines that the ratio of the service logs corresponding to the fourth case MISS in the plurality of service logs is not greater than the fourth threshold value th4 ("No" in S360), the memory controller 200 may terminate the execution of the method without adjusting the read ahead distance.

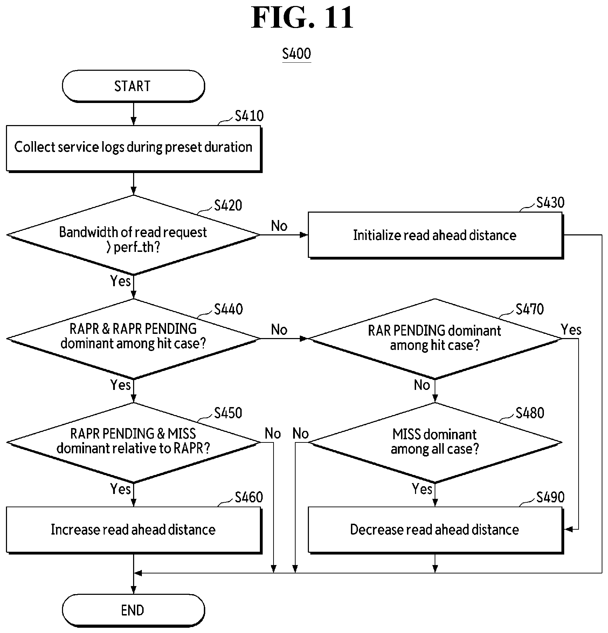

FIG. 11 is a flow chart illustrating a method for operating a memory controller according to some example embodiments.

A detailed description of redundant portions of those of FIG. 9 will be omitted in FIG. 11. A method S400 for operating a memory controller 200 may include collecting a plurality of service logs for a preset or alternatively, a desired duration (S410).

The method S400 for operating a memory controller 200 may include determining whether a read request bandwidth of the host device 10 is greater than a threshold value perf_th (S420). The read request bandwidth may be defined as, for example, the number of read requests per unit time of the host device 10. In some example embodiments, when the read request bandwidth of the host device 10 is sufficiently large, it may be advantageous for the memory controller 200 to quickly provide data requested by the host device 10 by using a read ahead scheme and/or the like in order to process sequential and fast read requests of the host device 10. However, in some example embodiments, when the read request bandwidth of the host device 10 is not large enough, the memory controller 200 may not provide data to the host device 10 quickly enough to use the read ahead scheme and/or the like. In some example embodiments, the threshold value perf_th may be, for example, 6000 MB/s, but this is only an example, and example embodiments are not limited thereto.

The method S400 for operating a memory controller 200 may include initializing the read ahead distance (S430) when the memory controller 200 determines that the read request bandwidth of the host device 10 is not greater than the threshold value perf_th ("No" in S420).

The method S400 for operating a memory controller 200 may include performing the operation S440 when the memory controller 200 determines that the read request bandwidth of the host device 10 is greater than the threshold value perf_th ("Yes" in S420). Since operations S440 to S490 are the same as the operations S220 to S270 of FIG. 9, their detailed description will be omitted.

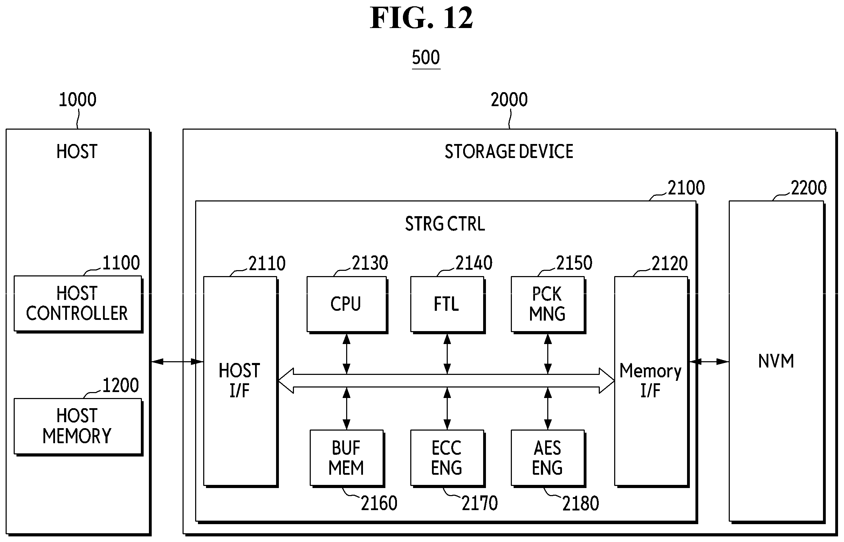

FIG. 12 is a block diagram illustrating a host-storage system to which a memory controller according to some example embodiments is applied.

Referring to FIG. 12, a host-storage system 500 may include a host 1000 and a storage device 2000. The storage device 2000 may include a storage controller 2100 and a nonvolatile memory device 2200. The host 1000 may include a host controller 1100 and a host memory 1200. The host memory 1200 may serve as a buffer memory for temporarily storing data to be transmitted and/or sent to the storage device 2000 and/or data transmitted and/or sent from the storage device 2000.

The storage device 2000 may include storage media for storing data in accordance with a request from the host 1000. In some example embodiments, the storage device 2000 may include at least one of a solid state drive (SSD), an embedded memory and/or a detachable external memory. In some example embodiments, when the storage device 2000 includes the SSD, the storage device 2000 may be a device that complies with the standard of a nonvolatile memory express (NVMe). In some example embodiments, when the storage device 2000 includes the embedded memory and/or the external memory, the storage device 2000 may be a device that complies with the standard of a universal flash storage (UFS) or an embedded multi-media card (eMMC). Each of the host 1000 and the storage device 2000 may generate and transmit or send packets according to a standard protocol that is employed.

According to some example embodiments, when the nonvolatile memory device 2200 of the storage device 2000 includes a flash memory, the flash memory may include a 2D NAND memory array or a 3D (or vertical) NAND (VNAND) memory array. In some example embodiments, the storage device 2000 may include other various types of nonvolatile memories. For example, a magnetic random access memory (MRAM), a spin-transfer torque MRAM, a Conductive Bridging RAM (CBRAM), a Ferroelectric RAM (FeRAM), a Phase RAM (PRAM), a Resistive RAM and/or other various types of memories may be applied to the storage device 2000.

Each of the host controller 1100 and the host memory 1200 may be implemented as a separate semiconductor chip. In some example embodiments, the host controller 1100 and the host memory 1200 may be integrated into the same semiconductor chip. For example, the host controller 1100 may be any of a plurality of modules provided in an application processor, and the application processor may be implemented as a system on chip (SoC). In some example embodiments, the host memory 1200 may be an embedded memory provided in the application processor, or may be a nonvolatile memory and/or memory module arranged outside the application processor.

The host controller 1100 may store data (e.g., write data) of a buffer region in the nonvolatile memory device 2200, and/or may manage an operation of storing data (e.g., read data) of the nonvolatile memory device 2200 in the buffer region.

The storage controller 2100 may include a host interface 2110, a storage-memory interface 2120 and a central processing unit (CPU) 2130. The storage controller 2100 may further include a flash translation layer (FTL) 2140, a packet manger 2150, a buffer memory 2160, an error correction code (ECC) engine 2170, and an advanced encryption standard (AES) engine 2180. The storage controller 2100 may further include a working memory in which the flash translation layer 2140 is loaded, and the CPU 2130 may control data write and read operations for the nonvolatile memory device 2200 by executing the flash translation layer 2140.

In some example embodiments, the storage device 2000 may receive a storage device driving signal from the host 1000 through the host interface 2110. The CPU 2130 may transmit and/or send an initialization command in response to the storage device driving signal. The initialization command may be transmitted and/or sent to the nonvolatile memory device 2200 through the storage-memory interface 2120.

The host interface 2110 may transmit and/or send and receive packets to and from the host 1000. The packets transmitted and/or sent from the host 1000 to the host interface 2110 may include a command or data to be written in the nonvolatile memory device 2200, and the packets transmitted and/or sent from the host interface 2110 to the host 1000 may include a response to the command or data read from the nonvolatile memory device 2200. The storage-memory interface 2120 may transmit and/or send the data to be written in the nonvolatile memory device 2200 to the nonvolatile memory device 2200 or may receive the data read from the nonvolatile memory device 2200. Such a storage-memory interface 2120 may be implemented to comply with standard protocols such as Toggle and/or Open NAND Flash Interface (ONFI), but example embodiments are not limited thereto.

The flash translation layer 2140 may perform various functions such as address mapping, wear-leveling and garbage collection. For example, the address mapping operation is an operation of changing a logical address received from the host 1000 to a physical address used to actually store data in the nonvolatile memory device 2200. For example, the wear-leveling is a technique for preventing and/or mitigating excessive degradation of a specific or alternatively, a desired block by allowing blocks in the nonvolatile memory device 2200 to be used uniformly, and may in some example embodiments be implemented through firmware technology for balancing erase counts of physical blocks. For example, the garbage collection is a technique for making sure of the available capacity in the nonvolatile memory device 2200 by copying valid data of an existing block to a new block and then erasing the existing block.

The packet manger 2150 may generate packets according to a protocol of an interface negotiated with the host 1000 and/or parse various kinds of information from the packets received from the host 1000. In some example embodiments, the buffer memory 2160 may temporarily store data to be written in the nonvolatile memory device 2200 and/or data to be read from the nonvolatile memory device 2200.

In some example embodiments, the buffer memory 2160 may be provided in the storage controller 2100, but example embodiments are not limited thereto, and in some example embodiments the buffer memory 2160 may be arranged outside (e.g., external) the storage controller 2100.

The ECC engine 2170 may perform error detection and correction functions for the read data read from the nonvolatile memory device 2200. For example, the ECC engine 2170 may generate parity bits for write data to be written in the nonvolatile memory device 2200, and the generated parity bits may be stored in the nonvolatile memory device 2200 together with the write data. In some example embodiments, when reading the data from the nonvolatile memory device 2200, the ECC engine 2170 may correct an error of the read data by using the parity bits read from the nonvolatile memory device 2200 together with the read data, and then may output the error-corrected read data.

The AES engine 218 may perform at least one of an encryption operation or a decryption operation for the data input to the storage controller 2100 by using a symmetric-key algorithm.

According to some example embodiments, the host 1000 may correspond to the host device 10 of FIG. 1. The storage device 2000 may correspond to the storage device 20 of FIG. 1. The storage controller 2100 may correspond to the memory controller 200 of FIG. 1. The nonvolatile memory device 2200 may correspond to the nonvolatile memory device 300 of FIG. 1. The buffer memory 2160 may correspond to the cache memory 220 of FIG. 1.

According to some example embodiments, the storage controller 2100 may collect a plurality of service logs indicating a result of an operation of providing requested data to the host 1000 for a preset or alternatively, a desired duration, adjust a read ahead distance based on the number of service logs, which indicate that data to be requested by the host 1000 has been successfully predicted and the storage controller 2100 has failed to provide the predicted data, among the plurality of service logs and prefetch a data chunk from the nonvolatile memory device 2200 to the buffer memory 2160 based on the adjusted read ahead distance.

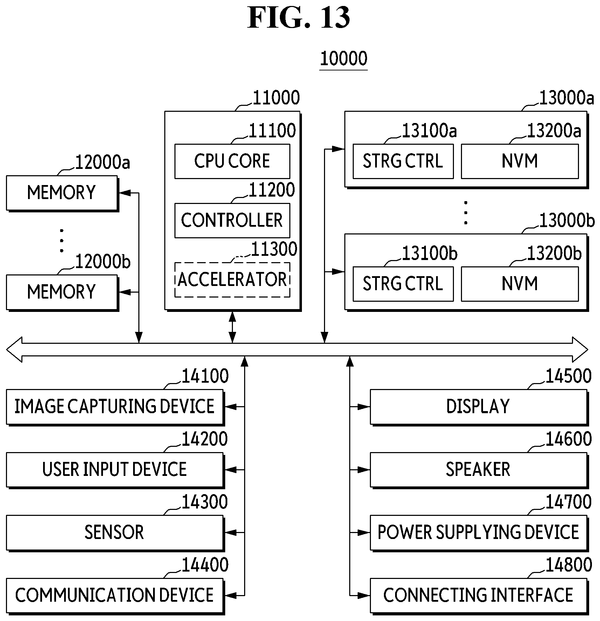

FIG. 13 is a block diagram illustrating a system that includes a storage device to which a memory controller according to some example embodiments is applied.

The system 10000 of FIG. 13 may be a mobile system such as a mobile communication terminal (e.g., a mobile phone), a smart phone, a tablet personal computer (PC), a wearable device, a healthcare device, and/or an Internet of things (IOT) device. However, the system 10000 of FIG. 13, according to some example embodiments, is not limited to the mobile system, and, in some example embodiments, the system 10000 may be a PC, a laptop computer, a server, a media player, and/or an automotive device (e.g., a navigator).

Referring to FIG. 13, the system 10000 may include a main processor 11000, memories 12000a and 12000b, and storage devices 13000a and 13000b. The system 10000 may further include at least one of an image capturing device 14100, a user input device 14200, a sensor 14300, a communication device 14400, a display 14500, a speaker 14600, a power supplying device 14700 and/or a connecting interface 14800.

The main processor 11000 may control the overall operation of the system 10000. For example, the main processor 11000 may control the operations of other components included in the system 10000. The main processor 11000 may be implemented as a general purpose processor, a dedicated processor, and/or an application processor.

The main processor 11000 may include at least one CPU core 11100, and may further include a controller 11200 for controlling the memories 12000a and 12000b and/or the storage devices 13000a and 13000b. In some example embodiments, the main processor 11000 may further include an accelerator 11300 that is a dedicated circuit for high-speed data computation such as artificial intelligence (AI) data computation. The accelerator 11300 may include a graphics processing unit (GPU), a neural network processing unit (NPU), and/or a data processing unit (DPU), and may be implemented as a separate chip physically separated from other components of the main processor 11000.

The memories 12000a and 12000b may be used as main memory devices of the system 10000. Each of the memories 12000a and 12000b may include a volatile memory such a static random access memory (SRAM) and/or a dynamic random access memory (DRAM), but example embodiments are not limited thereto, and in some example embodiments, each of the memories 12000a and 12000b may also include a nonvolatile memory such as a flash memory, a stage-change RAM (PRAM) and/or a resistive PRAM. In some example embodiments, the memories 12000a and 12000b may be implemented in the same package as the main processor 11000.

The storage devices 13000a and 13000b may serve as nonvolatile storage devices for storing data regardless of whether power is supplied, and may have a storage capacity greater than that of the memories 12000a and 12000b. The storage devices 13000a and 13000b may include storage controllers (STRG CTRL) 13100a and 13100b and nonvolatile memories (NVM) 13200a and 13200b for storing data under the control of the storage controllers 13100a and 13100b. The NVMs 13200a and 13200b may include a flash memory having a two-dimensional (2D) structure or a three-dimensional (3D) Vertical NAND (V-NAND) structure, but example embodiments are not limited thereto, and in some example embodiments, the NVMs 13200a and 13200b may also include other types of NVMs such as a PRAM and/or an RRAM.

The storage devices 13000a and 13000b may be physically separated from the main processor 11000, may be included in the system 10000, or may be implemented in the same package as the main processor 11000. In some example embodiments, the storage devices 13000a and 13000b may have a type of a solid state device (SSD) or a memory card, and may be detachably coupled to other components of the system 10000 through an interface such as the connecting interface 14800 that will be described later. Such storage devices 13000a and 13000b may be devices to which a standard protocol such as a Universal Flash Storage (UFS), an embedded Multi-Media Card (eMMC) and/or a Nonvolatile Memory express (NVMe) is applied, but example embodiments are not limited thereto.

The image capturing device 14100 may capture a still image and/or a video. The image capturing device 14100 may be a camera, a camcorder and/or a webcam.

The user input device 14200 may receive various types of data input from a user of the system 10000, and may include a touch pad, a keypad, a keyboard, a mouse and/or a microphone.

The sensor 14300 may sense various types of physical quantities that may be acquired from outside (e.g., external) of the system 10000, and may convert the sensed physical quantities into an electrical signal. The sensor 14300 may be a temperature sensor, a pressure sensor, an illuminance sensor, a position sensor, an acceleration sensor, a biosensor and/or a gyroscope sensor.

The communication device 14400 may transmit and/or send and receive signals between other devices outside and/or external to the system 10000 in accordance with various communication protocols. The communication device 14400 may include an antenna, a transceiver and/or a modem.

The display 14500 and the speaker 14600 may serve as output devices configured to output visual information and auditory information to a user of the system 10000, respectively.

The power supplying device 14700 may appropriately convert power supplied from an external power source and/or a battery embedded in the system 10000 and supply the converted power to each component of the system 10000.

The connecting interface 14800 may provide connection between the system 10000 and an external device connected to the system 10000 to transmit and/or send and receive data to and from the system 10000. The connecting interface 14800 may be implemented in a variety of interface modes such as Advanced Technology Attachment (ATA), Serial ATA (SATA), external SATA (e-SATA), Small Computer Small Interface (SCSI), Serial Attached SCSI (SAS), Peripheral Component Interconnection (PCI), PCI express (PCIe), NVM express (NVMe), IEEE 1394, universal serial bus (USB) interface, Secure Digital (SD) card interface, Multi-Media Card (MMC) interface, embedded multi-media card (eMMC) interface, Universal Flash Storage (UFS) interface, embedded Universal Flash Storage (eUFS) interface, and/or Compact Flash (CF) card interface.

According to some example embodiments, the main processor 11000 may correspond to the host device 10 of FIG. 1. The storage devices 13000a and 13000b may correspond to the storage device 20 of FIG. 1. The storage controllers 13100a and 13100b may correspond to the memory controller 200 of FIG. 1. The NVMs 13200a and 13200b may correspond to the nonvolatile memory device 300 of FIG. 1.

According to some example embodiments, the storage controller 13100a may collect a plurality of service logs indicating a result of an operation of providing requested data to the main processor 11000 for a preset or alternatively, a desired duration, adjust a read ahead distance based on the number of service logs, which indicate that data to be requested by the main processor 11000 has been successfully predicted and the storage controller 13100a has failed to provide the predicted data, among the plurality of service logs, and prefetch a data chunk from the NVM 13200a to the cache memory of the storage controller 13100a based on the adjusted read ahead distance. The description of the storage controller 13100a may be applied to the other storage controller 13100b illustrated in FIG. 13.

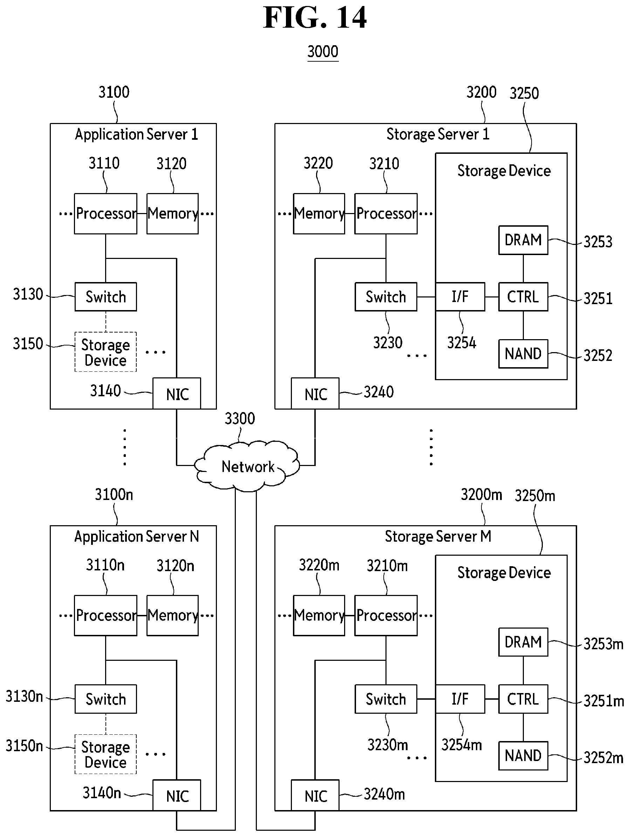

FIG. 14 is a block diagram illustrating a server system including a storage device to which a memory controller according to some example embodiments is applied.

Referring to FIG. 14, a server system 3000 is a system for providing a service by collecting various data. The server system 3000 may be a system for a search engine and/or a database operation, and may be a computing system used in an enterprise such as a bank and/or a government agency. The server system 3000 may include application servers 3100 to 3100n and data storage servers 3200 to 3200m. The number of application servers 3100 to 3100n and the number of data storage servers 3200 to 3200m may be variously selected in accordance with some example embodiments, and the number of application servers 3100 to 3100n and the number of storage servers 3200 to 3200m may be different from each other.

The application server 3100 or the data storage server 3200 may include at least one of processors 3110 and 3210 or memories 3120 and 3220. The data storage server 3200 will be described by way of example. The processor 3210 may control the overall operation of the data storage server 3200, and may access the memory 3220 to execute command languages and/or data loaded into the memory 3220. The processor 3210 may be, for example, the above-described host device (10 of FIG. 1) according to some example embodiments. The memory 3220 may be, for example, a Double Data Rate Synchronous DRAM (DDR SDRAM), a High Bandwidth Memory (HBM), a Hybrid Memory Cube (HMC), a Dual In-line Memory Module (DIMM), an Optane DIMM, and/or a Non-Volatile DIMM (NVMDIMM). In accordance with some example embodiments, the number of processors 3210 and the number of memories 3220, which are included in the data storage server 3200, may be variously selected.

The processor 3210 and the memory 3220 may provide a processor-memory pair. The number of processors 3210 and the number of memories 3220 may be different from each other. The processor 3210 may include a single core processor or a multi-core processor. The description of the data storage server 3200 may be similarly applied to the application server 3100. In accordance with some example embodiments, the application server 3100 may not include a server data storage device 3150. The data storage server 3200 may include at least one server data storage device 3250. The number of server data storage devices 3250 included in the data storage server 3200 may be variously selected in accordance with some example embodiments.

The application servers 3100 to 3100n and the data storage servers 3200 to 3200m may perform communication with each other through a network 3300. The network 3300 may be implemented using a Fibre Channel (FC) or Ethernet. In some example embodiments, the FC is a medium used for relatively high-speed data transmission, and may use an optical switch that provides high performance/high availability. In accordance with an access scheme of the network 3300, the data storage servers 3200 to 3200m may be provided as file storages, block storages and/or object storages.

The network 3300 may be a storage-only network such as a storage area network (SAN). For example, the SAN may be an FC-SAN that uses an FC network and is implemented in accordance with an FC protocol (FCP). In some example embodiments, the SAN may be an IP-SAN that uses a TCP/IP network and is implemented in accordance with an SCSI over TCP/IP or Internet SCSI (iSCSI) protocol. In some example embodiments, the network 3300 may be a general network such as a TCP/IP network. For example, the network 3300 may be implemented in accordance with protocols such as FC over Ethernet (FCoE), Network Attached Storage (NAS) and NVMe over Fabrics (NVMe-oF).

Hereinafter, the description will be based on the application server 3100 and the data storage server 3200. The description of the application server 3100 may be applied to other application server 3100n, and the description of the data storage server 3200 may be applied to other storage server 3200m.

According to some example embodiments, the application server 3100 may store data requested by a user and/or a client in one of the data storage servers 3200 to 3200m through the network 3300. In some example embodiments, the application server 3100 may acquire the data requested by the user and/or the client from one of the data storage servers 3200 to 3200m through the network 3300. For example, the application server 3100 may be implemented as a web server and/or a database management system (DBMS).

The application server 3100 may access a memory 3120n and/or a server data storage device 3150n, which is included in other application server 3100n, through the network 32300. In some example embodiments, the application server 3100 may access the memories 3220 to 3220m and/or server data storage devices 3250 to 3250m, which are included in the data storage servers 3200 to 3200m, through the network 3300. In some example embodiments, the application server 3100 may perform various operations for the data stored in the application servers 3100 to 3100n and/or the data storage servers 3200 to 3200m. For example, the application server 3100 may execute command languages for moving or copying data between the application servers 3100 to 3100n and/or the data storage servers 3200 to 3200m. For example, the data may be moved from the server data storage devices 3250 to 3250m of the data storage servers 3200 to 3200m to the memories 3220 to 3220m of the data storage servers 3200 to 3200m, and/or may be directly moved to the memories 3120 to 3120n of the application servers 3100 to 3100n. The data moved through the network 3300 may be data encrypted for security or privacy.

The data storage server 3200 will be described by way of example. According to some example embodiments, an interface 3254 may provide physical connection of the processor 3210 and a controller 3251 and physical connection of a Network InterConnect (NIC) 3240 and the controller 3251. For example, the interface 3254 may be implemented in a Direct Attached Storage (DAS) scheme that directly connects the server data storage device 3250 to a dedicated cable. In some example embodiments, the interface 3254 may be implemented in a variety of interface modes such as Advanced Technology Attachment (ATA), Serial ATA (SATA), external SATA (e-SATA), Small Computer Small Interface (SCSI), Serial Attached SCSI (SAS), Peripheral Component Interconnection (PCI), PCI express (PCIe), NVM express (NVMe), IEEE 1394, universal serial bus (USB) interface, Secure Digital (SD) card interface, Multi-Media Card (MMC) interface, embedded multi-media card (eMMC) interface, Universal Flash Storage (UFS) interface, embedded Universal Flash Storage (eUFS) interface, and/or Compact Flash (CF) card interface.

The data storage server 3200 may further include a switch 3230 and an NIC 3240. The switch 3230 may selectively connect the processor 3210 with the server data storage device 3250 in accordance with the control of the processor 3210, and/or may selectively connect the NIC 3240 with the server data storage device 3250.

The NIC 3240 may include a network interface card, a network adapter, and the like. The NIC 3240 may be connected to the network 3300 by a wired interface, a wireless interface, a Bluetooth interface, an optical interface, and/or the like. The NIC 3240 may include an internal memory, a Digital Signal Processor (DSP), a host bus interface, and the like, and may be connected to the processor 3210 and/or the switch 3230 through the host bus interface. The host bus interface may be implemented as one of the above-described examples of the interface 3254. In some example embodiments, the NIC 3240 may be integrated with at least one of the processor 3210, the switch 3230 or the server data storage device 3250.

In the data storage servers 3200 to 3200m or the application servers 3100 to 3100n, the processor may transmit and/or send a command to the server data storage devices 3130 to 3130n and 3250 to 3250m and/or the memories 3120 to 3120n and 3220 to 3220m to program and/or read data. In some example embodiments, the data may be error-corrected data through an Error Correction Code (ECC) engine. The data may be Data Bus Inversion (DBI) and/or Data Masking (DM) processed data, and may include Cyclic Redundancy Code (CRC) information. The data may be data encrypted for security and/or privacy.

The server data storage devices 3150 to 3150n and 3250 to 3250m may transmit and/or send a control signal and a command/address signal to NAND flash memory devices 3252 to 3252m in response to a read command received from the processor. Accordingly, in some example embodiments, when data is read from the NAND flash memory device 3252 to 3252m, a Read Enable (RE) signal may be input as a data output control signal, and thus may serve to output data to a DQ bus. A data strobe (DQS) may be generated using the RE signal. The command/address signal may be latched in a page buffer in accordance with a rising edge or a falling edge of a write enable (WE) signal.

The controller 3251 may control the overall operation of the server data storage device 3250. In some example embodiments, the controller 3251 may include a Static Random Access Memory (SRAM). The controller 3251 may write data in the NAND flash 3252 in response to a write command, or may read data from the NAND flash 3252 in response to a read command. For example, the write command and/or the read command may be provided from the processor 3210 in the data storage server 3200, the processor 3210m in another data storage server 3200m, or the processors 3110 and 3110n in the application server 3100 and 3100n. A DRAM 3253 may temporarily store (buffer) data to be written in the NAND flash 3252 or data read from the NAND flash 3252. In some example embodiments, the DRAM 3253 may store meta data. For example, the meta data is user data and/or data generated by the controller 3251 to manage the NAND flash 3252. The server data storage device 3250 may include a secure element (SE) for security and/or privacy.

According to some example embodiments, the processor 3210 in the data storage server 3200 may correspond to the host device 10 of FIG. 1. The server data storage device 3250 may correspond to the storage device 20 of FIG. 1. The controller 3251 in the data storage server 3200 may correspond to the memory controller 200 of FIG. 1. The NAND flash memory device 3252 may correspond to the nonvolatile memory device 300 of FIG. 1.

According to some example embodiments, the controller 3251 may collect a plurality of service logs indicating a result of an operation of providing requested data to the processor 3210 for a preset or alternatively, a desired duration, adjust a read ahead distance based on the number of service logs, which indicate that data to be requested by the processor 3210 has been successfully predicted and the controller 3251 has failed to provide the predicted data, among the plurality of service logs and prefetch a data chunk from the NAND flash memory device 3252 to the cache memory of the controller 3251 based on the adjusted read ahead distance.

Although some example embodiments of the present inventive concepts have been described with reference to the accompanying drawings, the present inventive concepts are not limited to the above example embodiments, but may be implemented in various different forms. A person skilled in the art may appreciate that the present inventive concepts may be practiced in other concrete forms without departing from the present inventive concepts. Therefore, it should be appreciated that some example embodiments as described above are not restrictive but illustrative in all respects.

## Claims

1. A method for operating a memory controller (200), the method comprising:
collecting (S110) a plurality of service logs indicating a result of an operation of providing requested data to a host device (10, 1000) for a duration;
adjusting a (S120) read ahead distance based on a first number of first service logs among the plurality of service logs, the first service logs indicating that the data to be requested by the host device (10, 1000) has been successfully predicted, as predicted data, and the memory controller (200) has failed to provide the predicted data; and
prefetching (S130) a data chunk from a nonvolatile memory device (300) to a cache memory (220) based on the read ahead distance.

2. The method of claim 1, wherein
the adjusting (S120) the read ahead distance based on the first number of the first service logs among the plurality of service logs includes,
comparing, as a first comparison, a first sum of the first number of the first service logs and a second number of second service logs among the plurality of service logs with a third number of third service logs among the plurality of service logs; and
adjusting the read ahead distance based on the first comparison,
the second service logs indicating that the data to be requested by the host device (10, 1000) has been successfully predicted and the memory controller (200) has successfully provided the predicted data, and
the third service logs indicating that cached data is provided to the host device (10, 1000).

3. The method of claim 2, wherein the first comparison of the first sum of the first number of the first service logs and the second number of the second service logs with the third number of the third service logs includes determining whether a ratio of the first sum of the first number of the first service logs and the second number of the second service logs to a second sum of the first number of the first service logs, the second number of the second service logs and the third number of the third service logs is greater than a first threshold value.

4. The method of claim 2 or 3, wherein the adjusting the read ahead distance based on the first number of the first service logs among the plurality of service logs further includes comparing, as a second comparison, a second sum of the first number of the first service logs and a fourth number of fourth service logs among the plurality of service logs with the second number of the second service logs, the fourth service logs indicating that prediction for the data to be requested by the host device (10, 1000) has failed.

5. The method of claim 4, wherein the second comparison of the second sum of the first number of the first service logs and the fourth number of the fourth service logs with the second number of the second service logs includes determining whether a ratio of the second number of the second service logs to the first number of the first service logs and the fourth number of the fourth service logs is greater than a first threshold value.

6. The method of claim 5, wherein the adjusting the read ahead distance based on the second comparison includes increasing the read ahead distance in response to determining that the ratio of the second number of the second service logs to the first number of the first service logs and the fourth number of the fourth service logs is greater than the first threshold value.

7. The method of claim 2, wherein the adjusting the read ahead distance based on the first number of the first service logs among the plurality of service logs further includes comparing, as a second comparison, a fourth number of fourth service logs among the plurality of service logs with a fifth number of the plurality of service logs among the plurality of service logs, the fourth service logs indicating that prediction for the data to be requested by the host device (10, 1000) has failed.

8. The method of claim 7, wherein the second comparison of the fourth number of the fourth service logs with the fifth number of the plurality of service logs includes determining whether a ratio of the fourth number of the fourth service logs to the fifth number of the plurality of service logs is greater than a first threshold value.

9. The method of claim 8, wherein the adjusting the read ahead distance based on the second comparison includes reducing the read ahead distance in response to determining that the ratio of the fourth number of the fourth service logs to the fifth number of the plurality of service logs is greater than the first threshold value.

10. The method of any one of claims 1 to 9, further comprising initiating the read ahead distance in response to a read request bandwidth of the host device (10, 1000) being smaller than a threshold value.

11. A memory controller (200), comprising:
a memory configured to store a plurality of commands; and
a processing circuit, the processing circuit configured to execute the plurality of commands to cause the processing circuit to perform the method of any one of claims 1 to 10.

12. A storage device, comprising:
a nonvolatile memory device (300) configured to store first data; and
a memory controller (200) configured to provide requested second data from the nonvolatile memory device (300) to a host device (10, 1000) in response to a read request from the host device (10, 1000), the memory controller (200) including
a cache memory (220),
a log management unit configured to collect a plurality of service logs indicating a result of an operation of providing the requested second data to the host device (10, 1000) for a duration,
a read ahead management unit (212) configured to adjust a read ahead distance based on a number of service logs among the plurality of service logs, the service logs indicating that the second data to be requested by the host device (10, 1000) has been successfully predicted, as predicted data, and the memory controller (200) has failed to provide the predicted data, and
a prefetch controller (213) configured to prefetch a data chunk from the nonvolatile memory device (300) to the cache memory (220) based on the read ahead distance.
